# EUROPÄISCHE PATENTANMELDUNG

(11) **EP 4 151 695 A1**
(43) Veröffentlichungstag der Anmeldung: **22.03.2023**
(21) Anmeldenummer: 21197207.0
(22) Anmeldetag: 16.09.2021
(51) Int. Cl.: C09K 5/06, F28D 20/02

(54) **WÄRMESPEICHERKAPSEL MIT EINEM PHASENWECHSELMATERIAL**

(71) Anmelder: Cowa Thermal Solutions AG, 6039 Root D4 Luzern (CH)
(72) Erfinder: Maranda, Simon, 6005 Luzern (CH); Grob, Markus, 4153 Reinach BL (CH); Kramer, Erich, 5002 Brugg (CH); Neuhaus, Sonja, 5102 Rupperswil (CH); Widner, Daniel, 8050 Zürich (CH)
(74) Vertreter: Keilitz Haines & Partner Patentanwälte PartGmbB

(57) **Zusammenfassung**

Die Erfindung betrifft eine Wärmespeicherkapsel (11) zur Verwendung in einem Heiz- oder Kühlsystem (1), in dem Wärme mittels eines Arbeitsfluids (8) transportiert wird, das die Wärmespeicherkapsel (11) umströmt, wobei die Wärmespeicherkapsel eine Hülle (12) aufweist, die einen Innenraum (13) umgibt, der wenigstens teilweise mit einem Phasenwechselmaterial (17) befüllt ist. Es wird vorgeschlagen, die Hülle (12) aus einem Kunststoff herzustellen, in dem ein Füllstoff (15) eingebettet ist, der eine physische Diffusionsbarriere für das Arbeitsfluid (8) bildet, das von außen in den Innenraum (13) der Wärmespeicherkapsel (11) einbringen möchte.

## Beschreibung

### TECHNISCHES FACHGEBIET

Die Erfindung betrifft Gebäude-Heizsysteme, die ein Arbeitsfluid - üblicherweise Wasser - als Wärmespeichermedium nutzen, das einer Gebäudeheizung zugeführt wird. Die dem Gebäude zur Verfügung gestellte Wärme bzw. Kälte kann mittels unterschiedlichster Technologien, wie z. B. Solarthermie, einer Wärmepumpe oder einem Brennofen erzeugt werden. Derartige Heizsysteme umfassen in der Regel einen Speicherbehälter in Form eines Tanks, in dem das aufgeheizte Arbeitsfluid gespeichert wird.

Aus dem Stand der Technik ist es ferner bekannt, derartige Speicherbehälter mit einer Vielzahl von Wärmespeicherkapseln zu füllen, die mit einem Phasenwechselmaterial (englisch: Phase Change Material, PCM) gefüllt sind, das die Eigenschaft hat, bei definierten Temperaturen (der Phasenwechseltemperatur) einen Phasenwechsel beispielsweise von fest zu flüssig oder umgekehrt zu durchlaufen und dabei eine relativ große Menge an thermischer Energie aufzunehmen (von fest zu flüssig) oder abzugeben (von flüssig zu fest), wobei der Phasenwechsel bei einer nahezu konstanten Temperatur des PCM abläuft. Das Aufladen des Speicherbehälters mit thermischer Energie bzw. die Abgabe von thermischer Energie aus den Wärmespeicherkapseln erfolgt über das Arbeitsfluid, das durch den Speicherbehälter fließt und die darin enthaltenen Kapseln umströmt.

Aus der DE 10 258 226 A1 ist beispielsweise eine Raumheizung mit einem Speicherbehälter bekannt, der mit kugelförmigen Wärmespeicherkapseln befüllt ist. Die EP 3 249 335 A1, WO 2012/138972 A2, DE 10 2017 206 707 A1, WO 2014/1024 A1, US 2012 018116 A1, CN 2015583173 U, CN 202221262 U, US 2017 254601 A1 und die WO 2018/122392 A1 beschreiben weitere Wärmespeicherkapseln, die mit einem Phasenwechselmaterial arbeiten. Die aus dem Stand der Technik bekannten Wärmespeicherkapseln umfassen in der Regel eine Kunststoffhülle. Beim Einsatz solcher Wärmespeicherkapseln im Speicherbehälter eines Gebäude-Heiz- oder Kühlsystem tendiert das Arbeitsfluid dazu, von außen durch die Hülle der Kapseln in den Innenraum zu diffundieren. Dadurch werden sowohl die thermischen Eigenschaften des in den Kapseln enthaltenen PCMs als auch die mechanische Stabilität der Kapselhülle beeinträchtigt.

### AUFGABE DER ERFINDUNG

Es ist daher eine Aufgabe der vorliegenden Erfindung, die Diffusion des Arbeitsfluids durch die Hülle zu reduzieren und die Beständigkeit der Hülle gegenüber dem Arbeitsfluid zu verbessern und somit einen reibungslosen Phasenwechsel des PCM über längere Zeit zu garantieren.

### DARSTELLUNG DER ERFINDUNG

Gelöst wird diese Aufgabe gemäß der Erfindung durch eine Wärmespeicherkapsel mit einer Hülle, die aus einem Kunststoff hergestellt ist, in dem ein Füllstoff eingebettet ist, der eine physische Diffusionsbarriere für das Arbeitsfluid darstellt, das von außen in den Innenraum der Wärmespeicherkapsel eindringen möchte. Der Füllstoff bewirkt, dass das Arbeitsfluid einen wesentlich längeren Diffusionsweg hat, um in den Innenraum der Kapsel zu gelangen. Der Füllstoff ist vorzugsweise inert oder/und hydrophob und erhöht somit die wasserabweisenden Eigenschaften der Kapselhülle. Somit besitzt die erfindungsgemäße Kapsel im Verhältnis zu einer reinen Kunststoffkapsel einen vergleichsweise geringen Diffusionskoeffizienten. Durch die Verwendung der erfindungsgemäßen Wärmespeicherkapseln lässt sich die Speicherkapazität von herkömmlichen wasserbasierten Speicherbehältern (sogenannten Pufferspeichern) außerdem um bis zu einem Faktor vier erhöhen. In einen Pufferspeicher lassen sich so rund 40 kWh/m³ zusätzliche Wärmeenergie einbringen.

Der Kunststoff, aus dem die Hülle hauptsächlich hergestellt ist, ist vorzugsweise ein Polyethylen hoher Dichte (englisch: High Density Polyethylene, kurz HDPE), das aufgrund seines hohen Kristallinitätsgrades eine vergleichsweise geringe Wasserdampfdurchlässigkeit hat. Geeignete Materialien sind beispielsweise Borealis BB2581, Braskem HDE0358 oder HDPE B5822, HDPE B5823, HDPE B6246LS oder HDPE ICP 5703 der Fa. Sabic.

Der vorstehend genannte Füllstoff umfasst gemäß einer bevorzugten Ausführungsform der Erfindung eine Vielzahl mikroskopischer Partikel, deren maximale Ausdehnung vorzugsweise im unteren µm- oder im nm-Bereich liegt.

Der Füllstoff kann ein einziges Material oder ein Materialgemisch umfassen. Gemäß einer bevorzugten Ausführungsform der Erfindung umfasst der Füllstoff ein oder mehrere Materialien aus der Gruppe: Glasflocken, Graphen (beinhaltet auch Few-Layer-Graphen) oder ein Schichtsilikat. Geeignete Schichtsilikate sind z. B. Glimmer, Talkum oder Clay (Aluminiumoxidsilikat).

Bei ausschließlicher Verwendung von Glasflocken liegt der Anteil der Glasflocken am Gesamtgewicht der Hülle vorzugsweise zwischen 3% und Gew.40%, insbesondere zwischen 10% und 25Gew.%. Gemäß einer bevorzugten Ausführungsform der Erfindung beträgt die Konzentration der Glasflocken etwa 15 Gew.%.

Geeignete Glasflocken sind z.B. die Produkte ECR Glassflake Grade GF100 oder ECR Glassflake Milled Grade GF100 M der Firma Glassflake Ltd.

Anstelle von reinen Glasflocken kann beispielsweise auch eine Mischung aus Glasflocken und Graphen als Füllstoff verwendet werden. Bei einer solchen Mischung kann der Anteil der Glasflocken beispielsweise 3 % - 40 % und der von Graphen 0,01 %-10 % (die Angaben beziehen sich immer auf Gewichts-% des Hüllenmaterials) betragen. Gemäß einer bevorzugten Ausführungsform der Erfindung beträgt der Anteil der Glasflocken etwa 15 Gew.% und der von Graphen etwa 3 Gew.%.

Die Füllstoffpartikel können beispielsweise plättchenförmig gebildet sein oder die Form eines vieleckigen Körpers aufweisen. Die maximale Ausdehnung der Partikel liegt vorzugsweise im µm-Bereich und kann beispielsweise weniger als 150 µm, insbesondere zwischen 50µm und 130 µm, betragen.

Gemäß einer bevorzugten Ausführungsform der Erfindung sind die Füllstoffpartikel plättchenförmig gebildet und haben eine Dicke im unteren µm-Bereich, vorzugsweise eine Dicke von weniger als 25 µm und insbesondere etwa, insbesondere zwischen 5 nm und 10 µm..

Bei einer ausschließlichen Verwendung von Graphen als Füllstoff beträgt die Konzentration von Graphen in der Hülle vorzugsweise zwischen 0,01 Gew.% und 5 Gew.% der Hülle. Gemäß einer bevorzugten Ausführungsform der Erfindung beträgt die Graphen-Konzentration etwa 3 Gew.%. Ein geeignetes Produkt ist beispielsweise Graphen vom Typ xGnP^{®} Graphene Nanoplatelets Grade M.

Bei einer ausschließlichen Verwendung von Schichtsilikaten, wie z.B. Glimmer, Talkum oder Clay als Füllstoff beträgt die Konzentration der genannten Stoffe vorzugsweise zwischen 0,1 Gew.% und 60 Gew.% und liegt insbesondere zwischen 10 % und 20 %.

Gemäß der Erfindung kann die Diffusionsrate des Arbeitsfluids durch Verwendung von Füllstoffpartikeln mit einer Oberflächenbeschichtung (zur besseren Anbindung des Füllstoffs an Thermoplast) weiter reduziert werden. Gemäß einer bevorzugten Ausführungsform der Erfindung umfasst die Oberflächenbeschichtung ein Silan, wie z.B. 3-Aminopropyltrimethoxysilan (Aminosilan) oder Methacryloxypropyltrimethoxysilan (Acrylsilan). Entsprechende Produkte der Fa. Glassflake Ltd. sind beispielsweise ECR Glassflake Grade GF 100M (Amino) oder ECR Glassflake Grade GF 100M (Acrylic).

Alternativ oder zusätzlich kann auch die Hülle der Wärmespeicherkapsel an ihrer Innenseite und/oder Außenseite eine hydrophobe Oberflächenbeschichtung aufweisen. Diese kann beispielsweise aus einer UV-härtbaren hydrophoben Beschichtung bestehen oder eine andere aus dem Stand der Technik bekannte hydrophobe Zusammensetzung aufweisen.

Das Material der Hülle umfasst vorzugsweise auch einen oder mehrere Stabilisatoren, die die Widerstandsfähigkeit der Hülle verbessern. Während des Betriebs sind die Kapseln ständigen Temperaturschwankungen, mechanischen Belastungen und chemischen Einflüssen ausgesetzt. Zur Verbesserung der Witterungsbeständigkeit des Polymers der Kapselhülle können beispielsweise Phenole oder Phosphite als Stabilisatoren alleine oder als Kombination eingesetzt werden, wie z.B. Irgafos 168, Irganox 1330, Irganox 3114 oder Irganox 1010. Die Konzentration der Stabilisatoren kann beispielsweise zwischen 0,05 Gew.% und Gew. 0,8 % bezogen auf das Gewicht der Hülle, betragen. Gemäß einer bevorzugten Ausführungsform der Erfindung liegt der gesamte Gewichtsanteil der Stabilisatoren bei etwa 0,1% bis 0,5 Gew.%.

Das in den Wärmespeicherkapseln enthaltene PCM umfasst vorzugsweise organische, unpolare Substanzen aus der Klasse der Fettsäuren oder Fettsäureester. Insbesondere Myristinsäure, Palmitinsäure, Stearinsäure oder Mischungen daraus. Alternativ kann das PCM auch organische, unpolare Substanzen der Klasse der Alkane umfassen, bevorzugt Paraffine und Paraffinmischungen, insbesondere Octacosan, Triacontan, Dotriacontan und Mischungen daraus. Weiterhin kann das PCM auch organische und polare Substanzen der Klassen der Fettalkohole umfassen, beispielsweise Fettalkohole mit 18 - 30 Kohlenstoffatomen pro Molekül, insbesondere 1-Eicosanol, 1-Docosanol und Mischungen daraus.

Das PCM kann aber auch eine Mischung aus Wasser und Alkohol sein, beispielsweise eine Mischung aus Ethanol, Propylenglykol, Ethylenglykol und Wasser.

Gemäß einer bevorzugten Ausführungsform der Erfindung umfasst das PCM Natriumacetat-Trihydrat.

Gemäß einer bevorzugten Ausführungsform der Erfindung wird ein PCM auf Basis von Salzhydraten verwendet. Salzhydrate sind dabei Salzkristalle, die Wassermoleküle im Kristallgitter gebunden haben. Sie zeichnen sich durch eine hohe Energiedichte und niedrige Kosten aus und sind ferner umweltfreundlich.

Bei PCM auf Basis von Salzhydraten kann es gelegentlich zu negativen Effekten kommen durch die sogenannte "Segregation" sowie das "Unterkühlen". Beim Segregieren handelt es sich um das Trennen des Salzhydrates in verschiedene Phasen, wodurch die Speicherkapazität des PCM verloren geht. Das Unterkühlen ist ein Phänomen, bei dem das PCM beim Abkühlen mangels Kristallisationskeimen nicht erstarrt, sondern über den eigentlichen Erstarrungspunkt hinaus flüssig bleibt, wodurch die im PCM gespeicherte Wärme nicht freigegeben wird. Die genannten Effekte können durch Zugabe weiterer Stoffe zum PCM verhindert oder zumindest reduziert werden. Gemäß einer bevorzugten Ausführungsform der Erfindung enthält das PCM einen oder mehrere der folgenden Stoffe: Harnstoff CH₄N₂O, Dinatrium Hydrogen Phosphat Na₂HPO₄ (DSP) oder Xanthan.

Der Anteil (in Massen-%) von Harnstoff kann beispielsweise zwischen 30 % und 50 %, von DSP zwischen 2 % und 5% und von Xanthan zwischen 0,5 % und 3% liegen. Der Anteil des Hauptbestandteils des PCM, z.B. SAT kann z.B. zwischen 50 % und 70% liegen.

Die Schmelztemperatur des erfindungsgemäßen PCM liegt vorzugsweise bei 30 °C bis 35 °C.

Alternative Materialen zu DSP sind beispielsweise Natriumtetraborat (Na₂B₄O₇-CAS: 1330-43-4) oder Natriumwolframat Dihydrat (Na₂WO₄ 2H₂O; CAS: 10213-10) oder Natriumcarbonat (Na₂CO₃; CAS: 497-19-8). Alternativmaterialien zu Xanthangummi sind beispielsweise Carboxymethylcellulose (R⁰=CH₂COOH-CAS: 9004-32-4), Polyacrylsäure oder Bentonit.

Die vorliegende Anmeldung betrifft auch eine mit einem PCM gefüllte Wärmespeicherkapsel, welche die Form eines von der Seite flachgedrückten Eies oder eines Ellipsoids aufweist. Das Verhältnis von Länge zu Breite der Wärmespeicherkapsel liegt vorzugsweise bei etwa 2. Das Verhältnis von Breite zu Dicke beträgt ebenfalls vorzugsweise etwa 2.

Die Wärmespeicherkapsel besitzt vorzugsweise einen Einfüllstutzen, über den sie mit dem PCM befüllt werden kann.

Des Weiteren betrifft die vorliegende Anmeldung ein Gebäude-Heizsystem mit einem Speicherbehälter, der mit einer Vielzahl von erfindungsgemäßen Wärmespeicherkapseln gefüllt ist.

Schließlich betrifft die vorliegende Anmeldung auch ein spezielles PCM mit wenigstens einem der beiden folgenden Bestandteile: Dinatrium hydrogen phosphate (DSP), Xanthan. Die Hauptbestandteile des PCM sind vorzugsweise Natrium Acetat Trihydrat (SAT, CH₃COONa·3H₂O) und Urea (CH₄N₂O).

### KURZE BESCHREIBUNG DER ZEICHNUNGEN

Die Erfindung wird nachstehend anhand der beigefügten Zeichnung beispielhaft näher erläutert. Es zeigen:
Fig. 1a bis 1c verschiedene Ansichten einer mit einem PCM gefüllten Wärmespeicherkapsel gemäß einer Ausführungsform der Erfindung;
Fig. 2 eine vergrößerte Ansicht von Glasflocken, die als Füllstoff im Hüllenmaterial der Wärmespeicherkapsel von Fig. 1 verwendet werden;
Fig. 3 einen Querschnitt durch die Wand der Hülle der Wärmespeicherkapsel von Fig. 1;
Fig. 4 ein beispielhaftes Photovoltaik-Wärmepumpensystem in dem die Wärmespeicherkapsel von Fig. 1 zum Einsatz kommen kann; und
Fig. 5a, 5b eine Prinzipdarstellung des Beladens bzw. Entladens von Wärmeenergie in bzw. aus einem Speicherbehälter, der mit Wärmespeicherkapseln gem. Fig. 1 gefüllt ist.

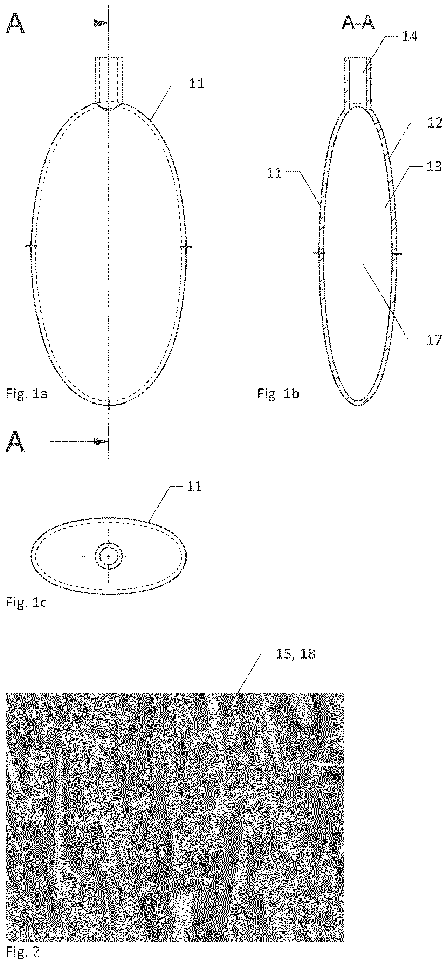

Die Fig. 1a bis 1c zeigen zwei Seitenansichten und eine Draufsicht auf eine mit einem PCM 17 gefüllten Wärmespeicherkapsel 11. Die Wärmespeicherkapsel hat eine Hülle 12, die einen hohlen Innenraum 13 umgibt, der mit einem Phasenwechselmaterial PCM 17 befüllt, das dazu vorgesehen ist, Wärme aus der Umgebung abzuziehen und zu speichern bzw. an die Umgebung abzugeben. Das PCM 17 schmilzt bei einer bestimmten Temperatur (der Phasenwechseltemperatur) und absorbiert dabei in einem nahezu isothermen Prozess eine relativ große Menge an Wärmeenergie. Beim Erstarren gibt es dieselbe Menge an Wärme wieder an die Umgebung ab. Das PCM 17 ist vorzugsweise so gewählt, dass der Phasenwechsel bei einer Temperatur zwischen 25 °C und 40 °C, insbesondere bei etwa 30°C stattfindet.

Derartige Wärmespeicherkapseln 11 kommen beispielsweise in Gebäude-Heiz- oder -Kühlsystemen zum Einsatz, bei denen die im Gebäude 7 benötigte Wärme mittels eines Arbeitsfluids 8 (z. B. Wasser) transportiert wird und die einen Speicherbehälter 3 in Form eines Tanks umfassen, in dem die Wärme gespeichert wird. Die in den Figuren 1a bis 1c dargestellten Wärmespeicherkapseln 11 sind dazu vorgesehen, als Schüttgut in solche Speicherbehälter 3 eingebracht zu werden. Der Wärmetransfer erfolgt in diesem Fall aus dem Arbeitsfluid in die Kapseln 11 bzw. umgekehrt aus den Kapseln 11 in das Arbeitsfluid.

Wie in den Figuren 1a bis 1c zu sehen ist, hat die Wärmespeicherkapsel 11 die Form eines von der Seite flachgedrückten Eies. Am oberen Ende der Wärmespeicherkapsel 11 befindet sich ein Einfüllstutzen 14. Das Verhältnis von Länge zu Breite der Kapsel 11 beträgt im dargestellten Beispiel etwa 2. Auch das Verhältnis von Breite zu Dicke der Kapsel 11 beträgt etwa 2. Eine bevorzugte Wärmespeicherkapsel 11 kann beispielsweise folgende Maße aufweisen:

**Tabelle 1**

| | |
|---|---|
| Füllvolumen PCM | 7.53 cl |
| Außenvolumen | 6.11 cl |
| Oberfläche Außen | 0.0109 m² |
| Länge | 104.8 mm |
| Breite | 52.4 mm |
| Dicke | 26.2 mm |
| Länge/Breite | 2 |
| Breite/Dicke | 2 |

Das in der Wärmespeicherkapsel 11 enthaltene Phasenwechselmaterial PCM 17 kann beispielsweise die folgende Zusammensetzung aufweisen:

**Tabelle 2**

| **Material** | **Funktion** | **Anteil (Massenprozent) [min max]** |
|---|---|---|
| Natrium Acetat Trihydrat (SAT) CH₃COONa·3H₂O | 1. Hauptbestandteil des PCM | 57.4 [57.0 - 57.8] |
| Harnstoff CH₄N₂O | 2. Hauptbestandteil des PCM | 38.6 [38.2 - 39.0] |
| Dinatrium hydrogen phosphat (DSP) Na₂HPO₄ | Auslösung der Erstarrung | 3 [2 - 4] |
| Xanthan gum | Verhinderung der Trennung | 1 [0.5 - 1.5] |

Die Stoffeigenschaften des oben genannten PCM-Gemischs sind:

**Tabelle 3**

| | |
|---|---|
| Schmelztemperatur | 32.38 °C |
| Phasenwechselenthalpie | 196.5 J/g |
| Dichte fest (20°C) | 1400 kg/m³ |
| Dichte flüssig (40°C) | 1300 kg/m³ |
| Spez. Wärmekapazität fest (20°C) | 2.5 kJ/kgK |
| Spez. Wärmekapazität flüssig (40°C) | 2.9 kJ/kgK |

Als Alternative zu DSP kann beispielsweise auch Natriumtetraborat (Na₂B₄O₇ CAS: 1330-43-4), Natriumwolframat Dihydrat (Na₂WO₄ 2H₂O CAS: 10213-10-2) und/oder Natriumcarbonat (Na₂CO₃ CAS:497-19-8) eingesetzt werden.

Als Alternative zu Xanthangummi kann beispielsweise auch Carboxylmethycellulose (R = CH₂COOH CAS: 9004-32-4), Polyacrylsäure und/oder Bentonit eingesetzt werden.

Das Basismaterial der Kapselhülle 12 ist vorzugsweise Polyethylen hoher Dichte HDPE, wie z.B. Borealis BB 25581 mit folgenden Eigenschaften:

**Tabelle 4.**

| **Name** | **Borealis BB2581** |
|---|---|
| *Schmelzflussrate MFR (190*/*2,16)* | 0.3g /10 min |
| *Dichte* | ≥ 0,958 g/cm³ |

Alternative Polyethylene hoher Dichte HDPE sind beispielsweise

**Tabelle 5**

| **Hersteller** | **Grade(s)** |
|---|---|
| Braskem | HDB0358 |
| Borealis | BB2588 |
| Sabic | HDPE B5822 |
| | HDPE B5823 |
| | HDPE B6246LS |
| | HDPE ICP 5703 |
| Lyondell Basell | Alathon L5840 |
| | Hostalen ACP5831 |
| Repsol | Alcudia 5703L |
| | Alcudia 5803 |
| MOL Group | Tipelin 6000 B |
| | Tipelin BB 620-17 |
| Sibur | PE HD 03580 SB |
| | PE HD 03580 NP |

Um das HDPE bei der Herstellung zu stabilisieren und gegenüber Umwelteinflüssen widerstandsfähiger zu machen, können verschiedene Stabilisatoren eingesetzt werden, wie nachfolgend dargestellt:

**Tabelle 6**

| **Produkt** | **CAS No.** | **Ziel konzentration** | **Bevorzugter Bereich** |
|---|---|---|---|
| Irgafos 168 | 31750-04-4 | 0.1 % | 0.05 % - 0.2 % |
| Irganox 1330 | 1709-70-2 | 0.3 % | 0.1 % - 0.5 % |
| Irganox 3114 | 276676-62-6 | 0.3 | 0.1 - 0.5 % |
| Irganox 1010 | 6683-19-8 | 0.3 % | 0.05 % - 0.5 % |

Bei der Verwendung der Wärmespeicherkapseln 11 in einem Kühl- oder Wärmesystem werden die Kapseln 11 vom Arbeitsfluid 8 des Systems umströmt. Das Arbeitsfluid 8 diffundiert im Laufe der Zeit durch die Hülle 12 der Kapseln 11 in den Innenraum 13 und beeinträchtigt dadurch die thermischen Eigenschaften des PCM 17. Um die Diffusionsrate durch die Hülle 12 zu reduzieren, können verschiedene Füllstoffe 15 in das HDPE-Basismaterial integriert werden. Gemäß einer Ausführungsform werden dem Basismaterial Glasflocken 18 beigemischt, wie in der nachfolgenden Tabelle angegeben ist. Die Glasflocken 18 können unverändert vorliegen oder mit einer speziellen Oberflächenbeschichtung versehen sein.

**Tabelle 7**

| *Name* | **ECR GLASSFLAKE Grade GF100** | **ECR GLASSFLAKE MILLED Grade GF100M** |
|---|---|---|
| *Form* | Vieleckig, mikroskaliges Bruchglas | Vieleckig, mikroskaliges Bruchglas |
| *Zusammensetzung* | 64 - 70 % SiO₂, 8 - 13 % Na₂O und weitere | 64 - 70 % SiO₂, 8 - 13 % Na₂O und weitere |
| *Reale Dichte* | 2.6 g/cm³ | 2.6 g/cm³ |
| *Scheinbare Dichte* | 0.085 g/cm³ | 0.1 g/cm³ |
| *Grösse Lateral (Durchmesser)* | 140 - 160 µm | 105 - 130 µm |
| *Dicke* | 1.0 - 1.3 µm | 0.9 - 1.3 µm |
| *Oberflächenbehandlung* | • Ohne oder | • Ohne oder |
| | • 3-Aminopropyltriethoxy Silane (Amino) oder | • 3-Aminopropyltriethoxy Silane (Amino) oder |
| | • Methacryloxypropyltrime thoxy Silane (Acrylic) | • Methacryloxypropyltrimetho xy Silane (Acrylic) |

Alternative Glasflocken 18 sind beispielsweise:

**Tabelle 8**

| *Produkt* | *Beschichtung* | *Konzentration Flocken* |
|---|---|---|
| **ECR GLASSFLAKE Grade GF100 Amino** | 3-Am inopropyltriethoxy Silane (Amino) | 5 - 40 % |
| **ECR GLASSFLAKE Grade GF100 Acrylic** | Methacryloxypropyltrimethoxy Silane (Acrylic) | 5 - 40 % |
| **ECR GLASSFLAKE Grade GF100M** | Ohne | 5 - 40 % |
| **ECR GLASSFLAKE Grade GF100** | Ohne | 5 - 40 % |
| **ECR GLASSFLAKE Grade GF100M customized** | variable Beschichtung | 5 - 40 % |

Alternativ oder zusätzlich zu den genannten Glasflocken 18 kann beispielsweise auch Graphen in reiner Form oder als Masterbatch hinzugefügt werden, wie nachfolgend angegeben ist.

**Tabelle 9**

| *Produkt* | *Beispielprodukt* | *Zielkonzentration* | *Konzentrationsbereich* |
|---|---|---|---|
| **Graphen rein** | **xGnP^{®} Graphene Nanoplatelets Grade M** | 3 % | 0.01 % - 5 % |
| **Graphen als Masterbatch** | - | 3 % | 0.01 % - 5 % |

Bei einer Verwendung einer Kombination aus Glasflocken 18 und Graphen als Füllstoff 15 können beispielsweise folgende Konzentrationen eingestellt werden:

**Tabelle 10**

| *Füller 1* | *Zielkonzentration* | *Konzentrationsbereich* |
|---|---|---|
| *Füller 2* | | |
| **Glassflakes (Amino oder Acrylic)** | 15 % | 5 % - 40 % |
| **Graphen (Masterbatch oder rein)** | 3 % | 0.01 % -10 % |

Alternative Füllstoffe 15 sind beispielsweise Schichtsilikate, wie aus Tabelle 11 ersichtlich.

**Tabelle 11**

| *Produkt* | *Beispielprodukt* | *Zielkonzentration* | *Konzentrationsbereich* |
|---|---|---|---|
| **Schichtsilikate** | Glimmer | 15 % | 5 % - 60 % |
| | Talkum | 15 % | 5 % - 60 % |
| | Clay (Aluminiumoxidsilikat) | 15% | 0.1 % - 40 % |

Fig. 2 zeigt eine mikroskopische Darstellung von Glasflocken 18, die in einem HDPE-Basismaterial eingebettet sind.

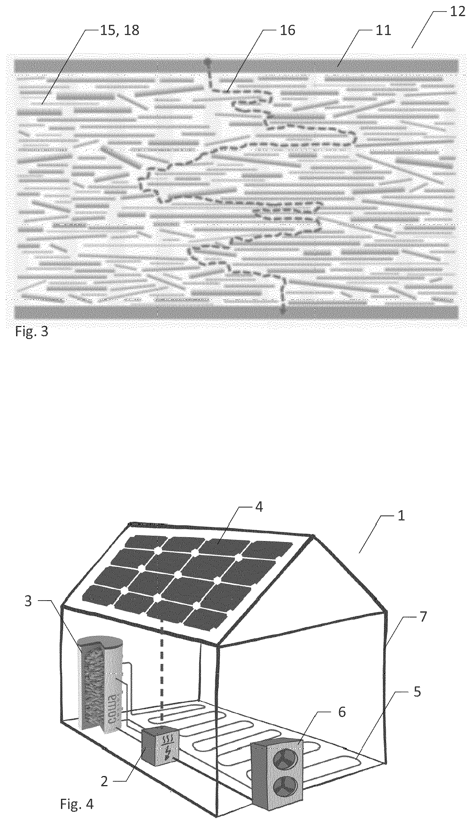

Fig. 3 zeigt einen Querschnitt durch eine Wand der Hülle 12. Das Material der Hülle 12 besteht in diesem Fall aus HDPE, in dem eine Vielzahl von Glasflocken 18 eingebettet ist. Die Glasflocken 18 bilden eine physische Barriere für das Arbeitsfluid, das in den Innenraum 13 der Wärmespeicherkapsel 12 eindringen möchte. Aufgrund der Glasflocken 18 muss das Arbeitsfluid 8 einen wesentlich längeren Diffusionsweg 16 zurücklegen.

Fig. 4 zeigt ein vom Aufbau her bekanntes Photovoltaik-Wärmepumpensystem 1 (PV-WP-System), das mit den vorstehend beschriebenen Wärmespeicherkapseln 11 arbeitet. Das System 1 umfasst eine Wärmepumpe 2, die von einer Photovoltaikanlage 4 mit Strom versorgt wird, einen Speicherbehälter 3, eine Fußbodenheizung 5 mit mehreren Heizschlangen und einen Wärmetauscher 6.

Das System 1 ist in einem Gebäude 7 integriert. Der Speicherbehälter 3 ist mit den vorstehend beschriebenen Wärmespeicherkapseln 11 befüllt, wodurch die Wärmespeicherkapazität des Speicherbehälters 3 um bis zu einem Faktor vier größer ist als bei herkömmlichen wasserbasierten Wärmespeichern. In einem Speicherbehälter 3 lassen sich so rund 40 kWh/m³ zusätzliche Wärmeenergie speichern. Diese zusätzliche Speicherkapazität kann dazu benutzt werden, überschüssigen PV-Strom tagsüber in Form von Wärme zu speichern, welche dann in der Nacht im Gebäude 7 zur Verfügung gestellt werden kann. Die Eigenverbrauchsrate der PV-Anlage lässt sich dadurch typischerweise von rund 30 % auf 70 % steigern.

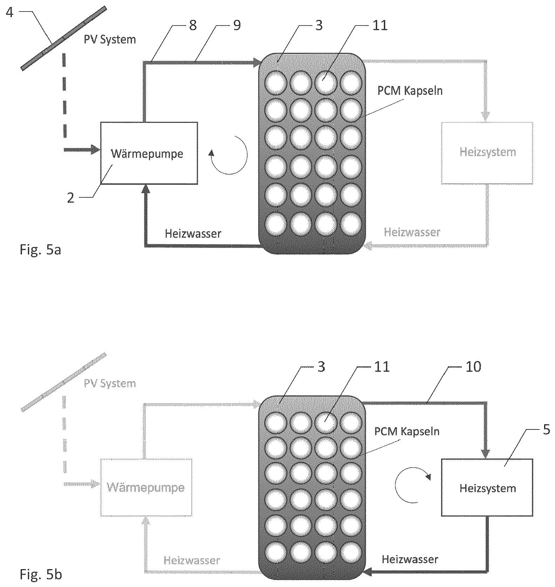

Das PV-WP-System 1 hat zwei grundsätzliche Betriebsmodi, die anhand der Figuren 5a und 5b näher erläutert werden. Fig. 5a zeigt dabei das Beladen des Speicherbehälters 3 mit thermischer Energie und Fig. 5b das Entladen des Speicherbehälters 3 durch Nutzung der Fußbodenheizung 5. Beim Beladen des Speicherbehälters 3 wird das Arbeitsfluid 8 (hier: Wasser) von der Wärmepumpe 2 aufgeheizt und über Leitungen 9 von oben nach unten durch den Speicherbehälter 3 gepumpt. Sobald die Temperatur des Arbeitsfluids 8 die Schmelztemperatur des PCM 17 überschreitet, schmilzt das PCM 17 in den Kapseln 11. Dieser Vorgang erfolgt bei nahezu konstanter Temperatur. Der Speicherbehälter 3 ist in diesem Beispiel vollständig mit Wärme beladen, wenn er eine Temperatur von 35 °C erreicht hat. Sobald im Gebäude 7 Heizwärme benötigt wird, strömt das erwärmte Arbeitsfluid 8 über Leitungen 10 von unten nach oben durch den Speicherbehälter 3 und entzieht dem in den Kapseln 11 enthaltenen PCM 17 Wärme. Das Arbeitsfluid 8 strömt dann über den zweiten Kreislauf in die Fußbodenheizung 5, wo es die Wärme an das Gebäude 7 abgibt. Das abgekühlte Arbeitsfluid 8 fließt dann zurück in den Speicherbehälter 3, wo das PCM 17 in den Kapseln 11 wieder erstarrt. Über ein Mischventil kann genau die gewünschte Vorlauftemperatur eingestellt werden. Der Speicherbehälter 3 ist in diesem Beispiel vollständig entladen, sobald die Temperatur 25 °C erreicht hat.

Die Regelung der Vorlauftemperatur kann beispielsweise über einen PID-Regler erfolgen, der als Stellgröße die Kompressordrehzahl der Wärmepumpe 2 hat.

## Patentansprüche

1. Wärmespeicherkapsel (11) zur Verwendung in einem Heiz- oder Kühlsystem (1), in dem Wärme mittels eines Arbeitsfluids (8) transportiert wird, das die Wärmespeicherkapsel (11) umströmt, wobei die Wärmespeicherkapsel eine Hülle (12) aufweist, die einen Innenraum (13) umgibt, der wenigstens teilweise mit einem Phasenwechselmaterial (17) befüllt ist,
**dadurch gekennzeichnet, dass**
die Hülle (12) aus einem Kunststoff hergestellt ist, in dem ein Füllstoff (15) eingebettet ist, der eine Diffusionsbarriere für das Arbeitsfluid (8) bildet, das von außen in den Innenraum (13) der Wärmespeicherkapsel (11) einbringen möchte.

2. Wärmespeicherkapsel (11) nach Anspruch 1,
**dadurch gekennzeichnet, dass**
der Kunststoff ein Polyethylen hoher Dichte umfasst.

3. Wärmespeicherkapsel (11) nach Anspruch 1 oder 2,
**dadurch gekennzeichnet, dass**
der Füllstoff (15) ein oder mehrere Materialien aus der Gruppe: Glasflocken (18), Graphen, Schichtsilikat, umfasst.

4. Wärmespeicherkapsel (11) nach Anspruch 3,
**dadurch gekennzeichnet, dass**
die Glasflocken (18) einen Anteil von 3 %-40 % am Material der Hülle (12) ausmachen.

5. Wärmespeicherkapsel (11) nach Anspruch 3,
**dadurch gekennzeichnet, dass**
der Füllstoff (15) Glasflocken (18) und Graphen umfasst.

6. Wärmespeicherkapsel (11) nach Anspruch 5,
**dadurch gekennzeichnet, dass**
die Glasflocken (18) einen Anteil von 3 %-40 %, insbesondere etwa 15 %, und Graphen einen Anteil von 0,01 %-10 % insbesondere etwa 3 % des Materials der Hülle 12 ausmachen.

7. Wärmespeicherkapsel (11) nach einem der vorhergehenden Ansprüche,
**dadurch gekennzeichnet, dass**
der Füllstoff (15) die Form eines Plättchens oder eines vieleckigen Körpers aufweist.

8. Wärmespeicherkapsel (11) nach einem der vorhergehenden Ansprüche,
**dadurch gekennzeichnet, dass**
der Füllstoff (15) eine Oberflächenbeschichtung (zur Adhäsionsverbesserung) aufweist.

9. Wärmespeicherkapsel (11) nach Anspruch 8,
**dadurch gekennzeichnet, dass**
die Oberflächenbeschichtung ein Silan umfasst.

10. Wärmespeicherkapsel (11) nach einem der vorhergehenden Ansprüche,
**dadurch gekennzeichnet, dass**
der Füllstoff (15) die Form eines Plättchens aufweist, mit einer Dicke von weniger als 10 µm, insbesondere zwischen 5 nm und 1 µm.

11. Wärmespeicherkapsel (11) nach einem der vorhergehenden Ansprüche,
**dadurch gekennzeichnet, dass**
der Füllstoff (15) die Form eines Plättchens aufweist, mit einer maximalen Ausdehnung im µm-Bereich, insbesondere zwischen 100 µm - 130 µm.

12. Wärmespeicherkapsel (11) nach einem der vorhergehenden Ansprüche,
**dadurch gekennzeichnet, dass**
der Füllstoff (15) eine Vielzahl von Partikeln umfasst.

13. Wärmespeicherkapsel (11) nach einem der vorhergehenden Ansprüche,
**dadurch gekennzeichnet, dass**
die Hülle (12) der Wärmespeicherkapsel (11) eine hydrophobe Oberflächenbeschichtung aufweist.

14. Wärmespeicherkapsel (11) nach einem der vorhergehenden Ansprüche,
**dadurch gekennzeichnet, dass**
das Material der Hülle (12) einen Stabilisator umfasst, der die Haltbarkeit der Hülle verbessert.

15. Wärmespeicherkapsel (11) nach einem der vorhergehenden Ansprüche,
**dadurch gekennzeichnet, dass**
das Phasenwechselmaterial (17) einen oder mehrere der folgenden Stoffe umfasst: Natrium Acetat Trihydrat, Dinatrium Hydrogenphosphat, Natriumperborat, Natriumwolframat Natriumcarbonat, Xanthan, Carboxymethylcellulose, Polyacrylsäure oder Bentholit.
